# EUROPEAN PATENT APPLICATION

(11) **EP 1 585 056 A1**
(43) Date of publication of application: **12.10.2005**
(21) Application number: 03768198.8
(22) Date of filing: 25.12.2003
(51) Int. Cl.: G06K 19/077, G06K 19/07, G06K 17/00, H04B 1/59, A63F 1/14

(54) **CARD MEDIUM WITH BUILT-IN RESONANCE TAG, METHOD FOR PRODUCING CARD MEDIUM, AND OBJECT IDENTIFYING DEVICE**

(30) Priority: 27.12.2002 JP 2002381251; 27.12.2002 JP 2002381497
(71) Applicant: Aruze Corp., Tokyo 135-0063 (JP); Seta Corporation, Tokyo 135-0063 (JP)
(72) Inventor: FUJIMOTO, Jun, c/o Aruze Corp., Koto-ku, Tokyo 135-0063 (JP); YOSHIOKA, Kazuei, c/o Seta Corp., Koto-ku, Tokyo 135-0063 (JP)
(74) Representative: Wiedemann, Peter
(86) International application number: PCT/JP2003/016659
(87) International publication number: WO 2004/061761

(57) **Abstract**

An object recognition device capable of recognizing distributed kinds and distributed positions of objects 11 is provided with: a plural kinds of resonant tags (1, 2, 3, ...) for sending different frequencies of echo waves (F1, F2, F3, ...) from each other; an object holding section Z for holding a plurality of objects each provided with a plurality of resonant tags; detection systems 9, 9' for transmitting predetermined frequencies of radio waves (W1, W2, W3, W4, W5, W6, W7, W8) to respective objects distributed from the object holding section to predetermined distribution areas (A, B, ...) and for detecting the echo waves sent from the plural kinds of resonant tags when the radio waves are transmitted; and a recognition system 27 for recognizing the distributed kinds and distributed positions of the objects based on the echo waves detected with the detection systems. A card medium with built-in resonant tags excellent in durability is provided through a manufacturing method that is simple and low in cost and that eliminates limitations to the number and kinds to be recognized.

## Description

### TECHNICAL FIELD

This invention relates to an object recognition device, a card medium with built-in resonant tag, and manufacturing methods of the card medium with built-in resonant tag. In particular, this invention relates to a technique for recognizing the kinds and positions of objects, for example an object recognition device capable of recognizing the distributed kinds and the distributed positions of objects such as playing cards distributed to predetermined distribution areas, a card medium with built-in resonant tag provided with a card body with built-in resonant tag that, when receiving an action of a radio wave having a predetermined frequency, oscillates an echo wave of the same frequency as that of the radio wave, and manufacturing methods thereof.

### BACKGROUND ART

As one of the conventional object recognition devices of the above type, a device is disclosed for example in the Patent Document 1, constituted with a plurality of resonant tags disposed on a plurality of objects or respective food containers and a detection system for detecting echo waves sent from respective resonant tags. This conventional device, by means of the detection system, recognizes a specific food container out of a plurality of food containers by detecting different kinds of echo waves sent from the respective resonant tags. (Patent Document 1: JP-A-Hei8-44794, (paragraphs 0010 - 0024))

The resonant tag is provided with a resonant circuit made up of an inductance L and a capacitor C. This resonant circuit is made to cause resonance phenomenon when a specific frequency of radio wave is applied to it, and to send an echo wave of the same frequency as that of the radio wave applied. Therefore, in case of recognizing a plurality of food containers by detecting echo waves with the conventional device, a different resonant tag for sending a different echo wave with a different frequency is required for each of the food containers. For example, if 50 pieces of food containers are to be recognized, 50 pieces of resonant tags are required.

In this case, 50 kinds of frequencies of the radio wave must be chosen to resonate respective resonant tags. However, choosing frequencies from bands close to each other results in frequencies of echo waves sent from respective resonant tags being close to each other. For example, if frequencies in adjacent bands are close to each other, echo waves become similar to each other. As a result, different kinds of food containers might be incorrectly recognized to be the same ones.

In order to accurately recognize a large number of food containers, frequencies in bands distant from each other may be chosen. However, because there are various limitations to the availability of frequencies, frequencies in too wide band cannot be unconditionally used.

Therefore, the conventional devices as described above have a problem in that the number and kinds of objects to be recognized are limited.

Another problem with the conventional devices is that, while the kind of the object can be recognized, the distributed position where the object is distributed cannot be recognized. For-example, in case a random object is to be chosen from among a plurality of objects and the object chosen is distributed in a random distribution area, it is impossible to recognize what kind of object is positioned in the distribution area.

Still another problem with the conventional devices is that, even in case for example the area for distributing the object is predetermined, if more than one objects are placed one over another in the distribution area, the kinds of the distributed objects cannot be identified.

This invention is made to solve the above problems, and its object is to provide an object recognition device capable of accurately recognizing distributed kinds and positions of objects regardless of number and kinds of the objects.

According to the conventional art, the resonant tags are made separately from the food containers and attached later to the food containers. Therefore, there are further problems of increase in the number of manufacturing processes and accordingly increase in manufacturing cost.

Moreover, the resonant tags attached later to the food containers are exposed outside and may easily come off by external forces.

This invention is also made to solve the above problems. Therefore, another object of this invention is to eliminate limitations to the number and kinds to be recognized by integrally and simultaneously manufacturing the card bodies with built-in resonant tags through a predetermined manufacturing process, so as to provide such card media with built-in resonant tags to be excellent in durability with a simple and low cost manufacturing method.

### DISCLOSURE OF THE INVENTION

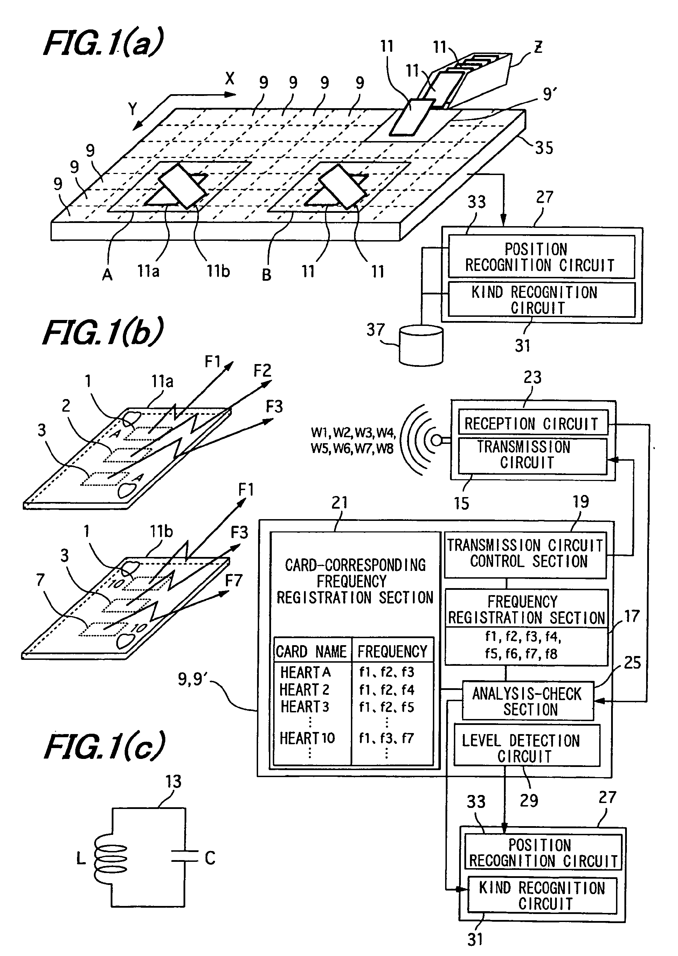

To achieve the object of the invention, the object recognition device related to the present invention is, as shown in Fig.1 for example, an object recognition device 11 (for example 11a, 11b) capable of recognizing distributed kinds and distributed positions of objects, comprising: a plurality of resonant tags (for example 1, 2, 3...) for sending echo waves (for example F1, F2, F3...) of different frequencies from each other; an object holding section Z for holding a plurality of objects 11 each provided with the plurality of resonant tags; a detection system 9, 9' for transmitting predetermined frequencies of radio waves to the respective objects (for example 11a, 11b) distributed from the object holding section to predetermined distribution areas (for example A, B...), and for detecting echo waves (for example F1, F2, F3...) sent from the plurality of resonant tags (for example 1, 2, 3...) when the radio waves are transmitted; and a recognition system 27 for recognizing distributed kinds and distributed positions of the objects 11 (for example 11a, 11b) based on the echo waves (for example F1, F2, F3...) detected with the detection system.

In the present invention, the detection system 9, 9' may be provided with: a transmission circuit 15 for transmitting radio waves (W1, W2, W3, W4, W5, W6, W7, W8), for causing the plurality of resonant tags (1, 2, 3. 1, 3, 7 for example) to send echo waves (F1, F2, F3, F4, F5, F6, F7, F8), to the plurality of objects; a frequency registration section 17 for setting and registering the frequencies of the radio waves; a transmission circuit control section 19 for causing the transmission circuit to transmit radio waves corresponding to respective frequencies registered in the frequency registration section; an object-corresponding frequency registration section 21 for combining and choosing two or more frequencies (f1, f2, f3. f1, f3, f7 for example) out of the frequencies registered in the frequency registration section and registering the two or more chosen frequencies as respectively related to the plurality of objects; a reception circuit 23 for receiving the echo waves sent from the plurality of resonant tags when the radio waves are transmitted from the transmission circuit; an analysis-check section 25 for analyzing the frequencies of the echo waves received with the reception circuit based on the frequencies registered in the frequency registration section and checking the analyzed frequencies with the plurality of objects registered in the object-corresponding frequency registration section; and a level detection circuit 29 for detecting the voltage value levels of the echo waves analyzed with the analysis-check section.

In the present invention, the recognition system may be provided with: a kind recognition circuit 31 for recognizing the distributed kinds of the objects based on the checked results made with the analysis-check section; and a position recognition circuit 33 for recognizing the distributed positions of the objects based on voltage levels of the echo waves detected with the level detection circuit.

In the present invention, the distribution areas (A, B for example) may be predetermined on an object placing area constituted by arranging a plurality of detection systems, the kind recognition circuit may recognize the distributed kinds of the objects based on the checked results made with the analysis-check section of the detection system while the objects are distributed from the object holding section to the distribution areas, and the position recognition circuit may recognize the distributed positions of the objects on the distribution areas based on the voltage value levels of the echo waves detected with the level detection circuit of the detection system.

In this case, the radio waves corresponding to respective frequencies registered in the frequency registration section may be transmitted from the transmission circuit of the detection system at predetermined time intervals in succession, and the resonant tags may oscillate, when the corresponding radio waves are transmitted, echo waves of the same frequencies as those of the radio waves.

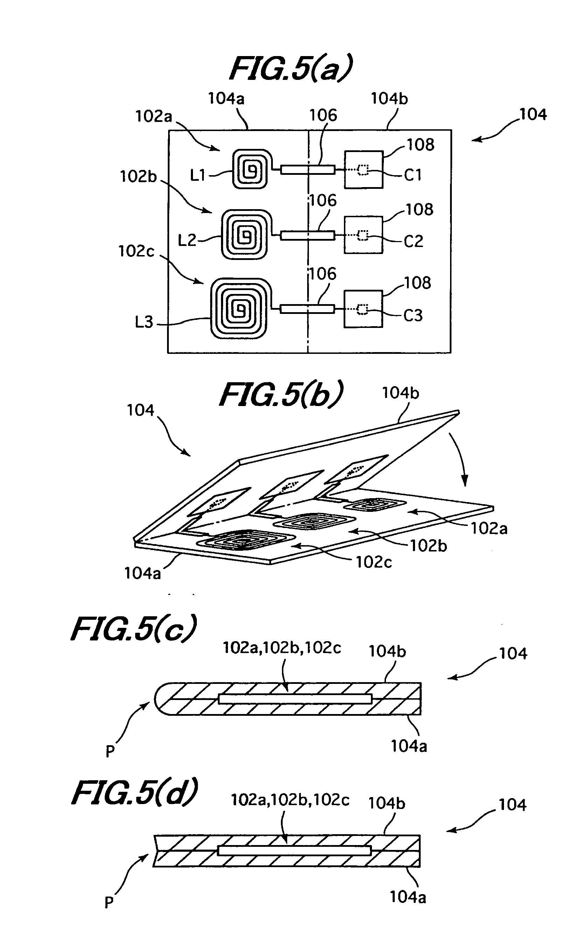

To achieve the object of the invention, as shown in Fig.5 for example, the card medium with built-in resonant tag comprises a resonant tag (102a, 102b, 102c for example) for oscillating, when receiving an action of radio wave of predetermined frequency, echo wave of the same frequency as that of the radio wave; and a card body 104 manufactured integrally and simultaneously with the resonant tag in a predetermined manufacturing process, wherein the card body with built-in resonant tag is manufactured in the manufacturing process by printing the resonant tag on the card body in developed state, followed by folding the developed state of card body in two.

The manufacturing method related to the present invention for a card medium provided with a card body 104 with built-in resonant tag (102a, 102b, 102c for example) for oscillating, when receiving an action of radio wave of predetermined frequency, echo wave of the same frequency as that of the radio wave, comprises a printing step of printing the resonant tag on the card body in developed state, and a placing step of having the resonant tag built in the card body by placing a portion of the card body on the other portion of the card body, the resonant tag being printed on the card body in the printing step.

The basic Japanese Patent Applications No. 2002-381251 filed on December 27, 2002 and No. 2002-381497 filed on December 27, 2002 are hereby incorporated in its entirety by reference into the present application.

Also, the invention can be fully understood, referring to the following description in details. Further extensive applications of the invention will be apparent from the following description in details. However, it should be noted that the detailed description and specific examples are preferred embodiments of the invention, only for the purpose of the description thereof. It is apparent for the person ordinary skilled in the art to modify and change in a variety of manners, within the scope and spirits of the invention.

The applicant does not intend to dedicate any disclosed embodiments to the public, and to the extent any disclosed modifications or alterations may not literally fall within the scope of the claims, they are considered to be part of the invention under the doctrine of the equivalents.

### BRIEF DESCRIPTION OF DRAWINGS

FIG. 1(a) is a perspective view showing a state in which objects (playing cards) are positioned in object placing areas each provided with a plurality of detection systems. FIG. 1(b) shows an overall constitution of an object recognition device as an embodiment of the invention. FIG. 1(c) shows a constitution of a resonant circuit for use in a resonant tag.
FIG. 2(a) is a chart showing the relationship between transmission timing of radio waves and sending timing of echo waves. FIGs. 2(b) and 2(c) show the state of voltage value levels of echo waves detected with a plurality of detection systems in a state in which an object (playing card) is placed across a plurality of detection systems.
FIGs. 3(a) to 3(c) are views showing constitutions of card media with built-in resonant tags manufactured according to a manufacturing method as a second embodiment of the invention.
FIGs. 4(a) to 4(c) show constitutions of card media with built-in resonant tags manufactured according to a manufacturing method as a third embodiment of the invention.
FIGs. 5(a) and 5(b) show constitutions of card media with built-in resonant tags manufactured according to a manufacturing method as a fourth embodiment of the invention. FIG. 5(c) is a sectional view with a folded portion in a round swollen shape. FIG. 5(d) is a sectional view with the folded portion cut in to form flush end surfaces.
FIGs. 6(a) to 6(c) show constitutions of card media with built-in resonant tags manufactured according to a manufacturing method as a fifth embodiment of the invention.
FIGs. 7(a) and 7(b) show constitutions of card media with built-in resonant tags manufactured according to a manufacturing method as a sixth embodiment of the invention.

### EMBODIMENT OF THE INVENTION

The object recognition device as a first embodiment of the invention will be described hereinafter with reference to FIG. 1.

As shown in FIGs. 1(a) to 1(c), the object recognition device of this embodiment is constituted to be capable of recognizing kinds and positions of distributed objects 11 (for example 11a and 11b). The object recognition device is provided with: a plurality of resonant tags (for example 1, 2, 3, ...) for sending echo waves (for example F1, F2, F3, ...) of different frequencies from each other; an object holding section Z for holding the plurality of objects 11 respectively provided with a plural kinds of resonant tags; detection systems 9, 9' for transmitting radio waves (for example W1, W2, W3, W4, W5, W6, W7, and W8) of predetermined frequencies to objects (for example 11a and 11b) distributed to predetermined distribution areas (for example A and B) and for detecting echo waves sent from the resonant tags in response to the transmission of the radio waves; and a recognition system 27 for recognizing the kinds and positions of the objects 11 (for example 11a and 11b) based on the echo waves (for example F1, F2, F3, ...) detected with the detection systems 9, 9'.

With the above constitution, a plural kinds of resonant tags are attached to each object 11 (for example, the resonant tags 1, 2, and 3 are attached to the object 11a, and resonant tags 1, 3, and 7 are attached to the object 11b). The kinds and positions of the objects (for example 11a and 11b) distributed from the object holding section Z to the predetermined distribution areas (for example A, B, ...) are recognized by detecting the echo waves (F1, F2, F3; F1, F3, F7) sent from the resonant tags.

Each resonant tag is provided with a resonant circuit 13 including an inductance L and a capacitor C. The resonant circuit 13, when excited by an applying radio wave (for example W1, W2, W3, W4, W5, W6, W7, W8) of a predetermined frequency that equalizes the inductive reactance ωL and the capacitive reactance 1/ωC, exhibits resonance phenomenon to send an echo wave (for example F1, F2, F3, F4, F5, F6, F7, F8) of the same frequency (for example f1, f2, f3, f4, f5, f6, f7, f8) as that of the radio wave applied.

Each of the detection system 9, 9' is provided with: a transmission circuit 15 for transmitting radio waves (W1, W2, W3, W4, W5, W6, W7, W8) to a plurality of objects (11a and 11b) for causing a plurality of resonant tags (for example 1, 2, 3, 1, 3, 7) to send echo waves (F1, F2, F3, F1, F3, F7); a frequency registration section 17 for setting.and registering frequencies (f1, f2, f3, f4, f5, f6, f7, f8) of the radio waves (W1, W2, W3, W4, W5, W6, W7, W8); a transmission circuit control section 19 for causing the transmission circuit 15 to transmit radio waves corresponding to the frequencies registered in the frequency registration section 17; an object-corresponding frequency registration section 21 for choosing combinations of two or more frequencies from the frequencies (for example f1, f2, f3, f1, f3, f7) registered in the frequency registration section 17 and registering the two or more frequencies chosen to assign the frequencies to the plurality of objects (11a and 11b) respectively; a reception circuit 23 for receiving the echo waves (F1, F2, F3, F1, F3, F7) sent from the plurality of resonant tags (1, 2, 3, 1, 3, 7) when the radio waves (W1, W2, W3, W4, W5, W6, W7, W8) are transmitted from the transmission circuit 15; an analysis-check section 25 for analyzing the frequencies (f1, f2, f3, f1, f3, f7) of the echo waves (F1, F2, F3, F1, F3, F7) received with the reception circuit 23 based on the frequencies (f1, f2, f3, f4, f5, f6, f7, f8) registered in the frequency registration section 17 and checking the analyzed frequencies (f1, f2, f3, f1, f3, f7) with the plurality of objects (11a and 11b) registered in the object-corresponding frequency registration section 21; and a level detection circuit 29 for detecting the voltage value levels of the echo waves analyzed with the analysis-check section 25.

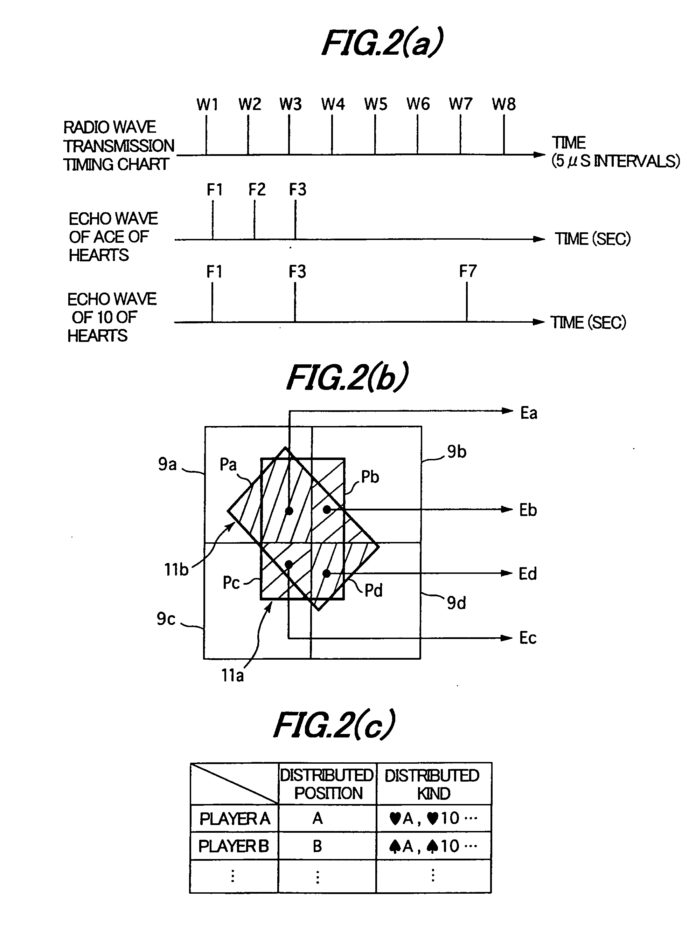

The recognition system 27 is provided with a kind recognition circuit 31 for recognizing the distributed kinds of the objects 11 based on the checked results made with the analysis-check section 25, and a position recognition circuit 33 for recognizing the distributed positions of the objects 11 based on voltage levels (for example Ea, Eb, Ec, Ed of FIG. 2(b)) of the echo waves (F1, F2, F3) detected with the level detection circuit 29.

In this embodiment, distribution areas (for example A, B, ...) are defined on an object placing area 35 constituted with a plurality of detection systems 9, 9', and a case is assumed in which individual objects 11 (for example playing cards 11a and 11b described later) are distributed from the object holding section Z to the distribution areas (for example A, B, ...). Here, according to the voltage value levels of the echo waves detected with the level detection circuit 29 of the detection systems 9, 9', the position recognition circuit 33 recognizes the positions of the objects (11a, 11b) distributed on the object placing area 35. At the same time, the kind recognition circuit 31 recognizes the kinds of objects (11a, 11b) distributed on the object placing area 35 based on the checked results made with the analysis-check section 25 of the detection systems 9, 9'.

In this embodiment, the object placing area 35 is assumed to be a casino table as shown in FIG. 1(a) and a plurality of objects 11 (for example playing cards 11a, 11b) are distributed on the casino table 35. A plurality of detection systems 9 are placed on the casino table 35 side by side in X and Y directions, and a detection system 9' is also placed in the vicinity of the object holding section Z and a position in front of the object holding section Z where an object 11 drawn out of the object holding section Z is to be placed ready for distribution. Also on the casino table 35 are defined distribution areas A and B in front of respective players, so that the playing cards 11 (11a, 11b) in a predetermined number drawn out of the object holding section Z are passed through the detection system 9' and distributed to the distribution areas A and B each provided with a plurality of detection systems 9. The distributed playing cards 11 (11a, 11b) are used to play games. Incidentally, the drawing shows an example state in which the playing cards 11a and 11b are distributed to the distribution area A while playing cards 11 (playing cards 11 other than 11a and 11b) are distributed to the distribution area B.

Also in this embodiment, the plurality of objects are assumed for example to be 54 playing cards 11 (in the drawing, shown only the ace of hearts 11a and the 10 of hearts 11b), and two or more resonant tags (for example 1, 2, 3; 1, 3, 7) are respectively provided to the playing cards 11 (for example 11a and 11b).

In order to recognize the kinds of 54 cards using a minimum number of resonant tags, eight kinds of resonant tags sending echo waves of mutually different frequencies are required. In that case, combinations of three kinds of resonant tags (₈C₃ = 56) may be disposed to respective cards. In case 11 resonant tags are used, combinations of two resonant tags (₁₁C₂ = 55) may be disposed to respective cards. Incidentally, the number of resonant tags used and the number of them disposed may be appropriately chosen according to the number and kinds of objects. Using combinations of two or more resonant tags makes it possible to recognize a maximum number of kinds of objects while minimizing the number of radio wave frequencies.

The example shown here uses eight resonant tags (while 1, 2, 3, and 7 only are shown in the drawing, actually they are 1 through 8), and combinations of three resonant tags are disposed to each of the 54 cards. In this case, in order to excite the eight resonant tags, eight frequencies (f1, f2, f3, f4, f5, f6, f7, f8) are registered in the frequency registration section 17 of the detection systems 9, 9'. Combinations of three frequencies out of eight frequencies registered in the frequency registration section 17 are chosen to assign the chosen frequencies to respective playing cards and registered in the object-corresponding frequency registration section or the card-corresponding frequency registration section 21. For example, the ace of hearts is associated to frequencies (f1, f2, f3), and the 10 of hearts is associated to frequencies (f1, f3, f7). Here, if the frequencies of the echo waves sent from the three resonant tags are combinations of (f1, f2, f3), the playing card is recognized to be the ace of hearts, and if the frequencies of the echo waves sent from the three resonant tags are combinations of (f1, f3, f7), the playing card is recognized to be the 10 of hearts.

Next, the actions of the object recognition device constituted as described above are explained. Here, an example process is described in which playing cards 11 are taken one by one out of the object holding section Z holding 54 playing cards 11, passed through the detection system 9', and a predetermined number of playing cards are distributed to the distribution areas A and B each provided with a plurality of detection systems 9. Here, the detection system 9' serves to recognize the distributed kinds of the playing cards 11 taken out of the object holding section Z for distribution. The plurality of detection systems 9 arranged in the distribution areas A and B serve to recognize the distributed positions of the playing cards 11 on the distribution areas A and B. Therefore, in the following description, the detection system 9' is tentatively referred to as the distributed kind detection system 9' and the detection system 9 as the distributed position detection system 9.

Since the process of distributing the predetermined number of the playing cards 11 is the same for both distribution areas A and B, description is made for one distribution area A to which two playing cards 11a and 11b are distributed in succession. Here, while the playing card 11a taken out of the object holding section Z is passed through the distributed kind detection system 9', eight radio waves (W1, W2, W3, W4, W5, W6, W7, W8) corresponding to the eight frequencies (f1, f2, f3, f4, f5, f6, f7, f8) registered in the frequency registration section 17 are transmitted at predetermined time intervals (FIG. 2(a)) from the transmission circuit 15 of the distributed kind detection system 9'. At this time, as radio waves (W1, W2, W3) of the same frequencies as the resonance frequencies of the resonant tags (1, 2, 3) act on the tags, echo waves (F1, F2, F3) of the same frequencies (f1, f2, f3) as those of the acting radio waves are sent from the resonant tags (1, 2, 3) of the playing card 11a.

The echo waves (F1, F2, F3) sent here are fed through the reception circuit 23 of the distributed kind detection system 9', and the frequencies (f1, f2, f3) of the echo waves (F1, F2, F3) are analyzed with the analysis-check section 25 according to the frequencies (f1, f2, f3, f4, f5, f6, f7, f8) registered in the frequency registration section 17. The analyzed frequencies (f1, f2, f3) are checked with the plurality of objects (card names) registered in the card-corresponding frequency registration section 21. The checked results are fed to the kind recognition circuit 31 of the recognition system 27. If the frequencies analyzed in the analysis-check section 25 are combinations of (f1, f2, f3), the card (or the playing card 11a) corresponding to the combinations is recognized to be the ace of hearts. As a result, the playing card 11a drawn out of the object holding section Z and distributed is recognized to be the ace of hearts.

Next, while the playing card 11b drawn out of the object holding section Z is passed through the distributed kind detection system 9' like the above description, eight radio waves (W1, W2, W3, W4, W5, W6, W7, W8) corresponding to the eight frequencies (f1, f2, f3, f4, f5, f6, f7, f8) registered in the frequency registration section 17 are transmitted at predetermined time intervals (FIG. 2(a)) from the transmission circuit 15 of the distributed kind detection system 9'. At this time, as radio waves (W1, W3, W7) of the same frequencies as the resonance frequencies of the resonant tags (1, 3, 7) act on the tags, echo waves (F1, F3, F7) of the same frequencies (f1, f3, f7) as those of the acting radio waves are sent from the resonant tags (1, 3, 7) of the playing card 11a

The echo waves (F1, F3, F7) sent here are fed through the reception circuit 23 of the distributed kind detection system 9' to the analysis-check section 25. There, the frequencies (f1, f3, f7) of the echo waves (F1, F3, F7) are analyzed with the analysis-check section 25 according to the frequencies (f1, f2, f3, f4, f5, f6, f7, f8) registered in the frequency registration section 17. The analyzed frequencies (f1, f3, f7) are checked with the plurality of objects (card names) registered in the card-corresponding frequency registration section 21. The checked results are fed to the kind recognition circuit 31 of the recognition system 27. If the frequencies analyzed in the analysis-check section 25 are combinations of (f1, f3, f7), the card (or the playing card 11b) corresponding to the combinations is recognized to be the 10 of hearts. As a result, the playing card 11b drawn out of the object holding section Z and distributed is recognized to be the 10 of hearts.

A distribution position recognition process is performed synchronously with the distributed kinds recognition process described above. In the recognition process, it is assumed that the two playing cards 11a and 11b drawn in succession out of the object holding section Z are placed one over the other in the distribution area A (as shown in FIG. 1(a)).

With respect to the plurality of distributed position detection systems 9 forming the distribution area A, for the echo waves (F1, F2, F3; F1, F3, F7) fed through the reception circuit 23 of the respective distributed position detection system 9 to the analysis-check section 25, voltage value level of the echo waves (F1, F2, F3; F1, F3, F7) are detected with the level detection circuit 29. The voltage value levels indicate the magnitudes of the voltage values induced with the respective echo waves in the reception circuit 23 and vary corresponding to the relative distances from the plurality of detection systems 9 to the respective objects (playing cards 11a and 11b). For example as shown in FIG. 2(b), in case the playing cards 11a and 11b are positioned to overlap four detection systems 9a, 9b, 9c, and 9d, voltage values Ea, Eb, Ec, and Ed corresponding to occupying areas Pa, Pb, Pc, and Pd of the playing cards 11a and 11b overlapping the respective detection systems 9a, 9b, 9c, and 9d are detected with the level detection circuits 29 of the respective detection systems 9a, 9b, 9c, and 9d. In other words, the voltage values Ea, Eb, Ec, and Ed detected with the level detection circuits 29 vary in proportion to the sizes of the occupying areas. Because the sizes of the occupying areas are Pa > Pb > Pc > Pd, the voltage value levels detected with the level detection circuits 29 are in the order of Ea > Eb > Ec > Ed. The voltage value levels detected with the level detection circuits 29 are fed to the position recognition circuit 33 of the recognition system 27, and the positions of the playing cards 11a and 11b are recognized according to the voltage value levels (Ea > Eb > Ec > Ed). In other words, it is recognized that the playing cards 11a and 11b are positioned in the state shown in FIG. 2(b).

As shown in FIG. 1(a), the plurality of distribution position detection systems 9 arranged on the casino table 35 are respectively provided with recognition numbers. The position recognition circuit 33 of the recognition system 27 is constituted to be capable of identifying the positions of the respective distribution position detection systems 9 on the casino table 35 based on the recognition numbers of the distribution position detection systems 9. In this case, the position recognition circuit 33 finds out the recognition number of the distribution position detection system 9 to which the level detection circuit 29 that has detected the change in the voltage value levels (Ea, Eb, Ec, and Ed) belongs, to identify the distribution position detection system 9 on the casino table 35, and to recognize that the playing cards 11a and 11b are positioned on the identified distribution position detection system 9. As a result, the distribution positions of the playing cards 11a and 11b on the casino table 35 are recognized with the position recognition circuit 33.

Thus, the positions of the distribution position detection systems 9 arranged at the respective distribution positions A and B on the casino table 35 are predetermined with their recognition numbers. Consequently, the voltage value levels (Ea, Eb, Ec, and Ed) of the distribution position detection systems 9 (level detection circuits 29) of the distribution position A to which the playing cards 11a and 11b are distributed vary. Therefore, according to variations in the voltage value levels, the position recognition circuit 33 can recognize that the playing cards 11a and 11b are positioned in the distribution position A.

When the distributed kinds and distributed positions of the playing cards 11a and 11b are to be recognized as described above, transmission timing of the eight radio waves (W1, W2, W3, W4, W5, W6, W7, W8) may be arbitrarily set. An example timing of the transmission is shown FIG. 2(a) in which the radio waves (W1, W2, W3, W4, W5, W6, W7, W8) are transmitted in sequence at 5 microsecond intervals. Since echo waves cannot be received while these radio waves are transmitted, the transmission of the radio waves is interrupted for a period of 45 microseconds for example. In order to increase the accuracy of recognition, detection is repeated for a plurality of times (for example 250 times). With such a setting condition, one playing card can be recognized (for kind and position) in about 10⁻¹ milliseconds: (5 µs + 45 µs) x 8 (number of radio waves) x 250 (number of detections) = 10⁻¹ ms. Therefore, even if all the 54 playing cards are recognized, it would take only about 5.4 ms (= 54 x 10⁻¹ ms). According to such a radio wave transmission timing chart, the distributed kind (ace of hearts) and the distributed position of the playing card 11a are accurately recognized with a short period of time by detecting the echo waves (F1, F2, F3) from the resonant tags (1, 2, 3) of the playing card 11a. On the other hand, the distributed kind (10 of hearts) and the distributed position of the playing card 11b are accurately recognized within a short period of time by detecting the echo waves (F1, F3, F7) from the resonant tags (1, 3, 7) of the playing card 11b.

As described above, this embodiment is constituted so that the playing card 11a drawn out of the object holding section Z is recognized for its distributed kind with the distributed kind detection system 9' and then for its distributed position with the distributed position detection system 9. Therefore, it is possible to recognize accurately within a short period of time during a card game what kinds of playing cards 11 have been distributed from the object holding section Z to the distribution areas A and B. Here, even in case a plurality of playing cards 11 are placed with one over another in the distribution area A and B and therefore it is hard to recognize the distributed kinds in the distribution areas A and B, because the distributed kinds of the playing cards 11 distributed from the object holding section Z to the distribution areas A and B are always recognized with the distributed kind detection system 9', no error can occur in recognizing the distributed positions and distributed kinds of the plurality of playing cards 11 distributed to the distribution areas A and B.

In this embodiment, if a history management memory 37 is connected to the kind recognition circuit 31 and the position recognition circuit 33 of the recognition system 27 (FIG. 1(a)) to record the distributed kinds recognized with the kind recognition circuit 31 and the distributed positions recognized with the position recognition circuit 33 for respective players A and B (FIG. 2(c)), it is possible to control all the distribution history of the playing cards 11 during a card game. As a result, diversified management is possible such as discovering foul plays in card games, reviewing game time, and so on.

This embodiment further makes it possible, even if the number and kinds of objects increase, to recognize distributed kinds and distributed positions of all the objects using a minimum number of resonant tags by combining two or more resonant tags. Here, because it is possible to minimize the number of radio waves used, the frequencies of echo waves of resonant tags are separated from each other. As a result for example, because frequencies in bands adjacent to each other are not close to each other, it is possible to solve the conventional problem of recognizing different objects to be the same ones by error due to similarity of echo waves to each other.

The above embodiment, in which the objects are assumed to be 54 playing cards, is an example and does not limit this invention. This invention may be applied to any objects, for which distributed kinds and distributed positions are to be recognized, such as traditional Japanese playing cards, various components flowing on production lines, books, and perishable foods, distributed through any routes in any process or environment.

Next, a card medium with built-in resonant tags and its manufacturing methods according to embodiments of this invention will be hereinafter described with reference to the attached drawings.

FIGs. 3(a) to 3(c) show the constitution of a card medium with built-in resonant tags manufactured according to a manufacturing method of the second embodiment of this invention.

The card medium with built-in resonant tags of this embodiment is provided with resonant tags (for example 102a, 102b, and 102c) for oscillating echo waves of the same frequencies as those of the radio waves when the action of predetermined frequencies of radio waves are received, and a card body 104 manufactured integrally and simultaneously with the resonant tags during a predetermined manufacturing process (for the card body itself). In this constitution, if a plural kinds of resonant tags are used (for example 102a, 102b, 102c) that oscillate echo waves of frequencies different from each other, it is possible to discriminate the card body 104 corresponding to the number of the resonant tags. Here, the card body is made by folding in two a flat sheet of a half thickness of a finished card medium of a size of one half plus the other half of the card medium, or by folding together two separate sheets into a single card medium. The sheet is typically cut or processed in rectangular shape. The sheet is made of a hard material having elasticity for bending.

The card medium described below is of a type with built-in resonant tags, and provided with one side piece of the card medium for forming the one side with built-in tags and the other side piece for forming the other side to be mated with the one side piece to form a card body. A plurality of resonant tags that oscillate, when receiving the action of radio waves of predetermined frequencies, echo waves of the same frequencies as those of the radio waves are placed between the mated two pieces of the card body. The frequencies of the echo waves sent from the resonant tags are typically different from each other. However, any card medium may include tags of the same frequencies.

A set of card media with built-in resonant tags described below is constituted with a plurality of the card media with built-in resonant tags described above. The set of card media with built-in resonant tags are for example playing cards for use in card games as described below in detail. Each of the plurality of card media with built-in resonant tags includes one side piece forming one face of the card medium with built-in resonant tags and the other side piece forming the other face to be mated with the one side piece to form a card body. A plurality of resonant tags that oscillate, when receiving the action of radio waves of predetermined frequencies, echo waves of the same frequencies as those of the radio waves are placed between the mated two side pieces of the card body. Frequencies sent from the plurality of resonant tags are made different from each other so that combinations of the different frequencies make it possible to discriminate the card media with built-in resonant tags from each other.

According to the manufacturing method described below, it is assumed that the resonant tag is printed on the inside surface of one or both of the side pieces. However, the card medium with built-in resonant tags may be alternatively made such that a third sheet of a small thickness on which resonant tags are provided by printing is sandwiched between the two side pieces.

In case that a set of card media with built-in resonant tags are for example playing cards, one side of each card is the front face printed with numeral and mark while the other side is the opposite face printed with a design of a common pattern.

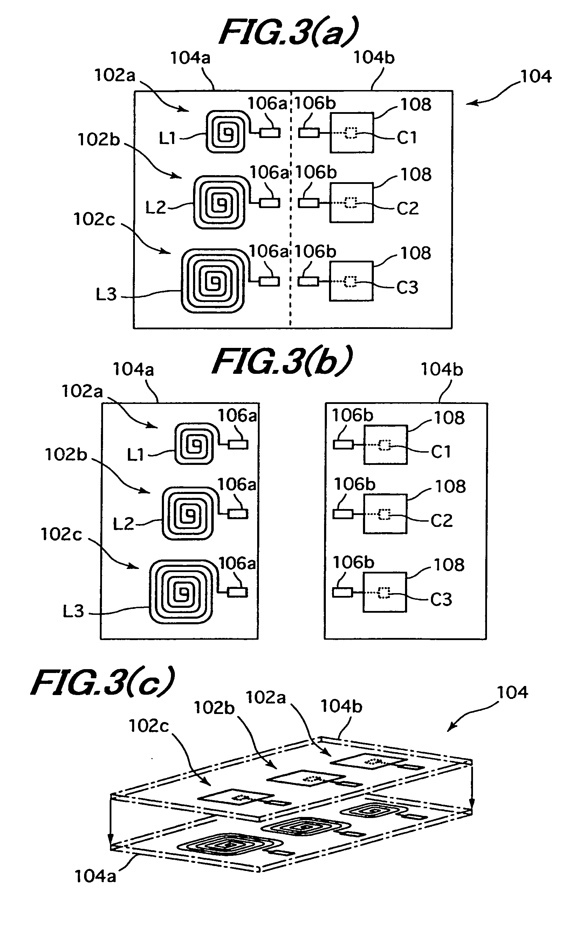

In this embodiment, the card bodies 104 are assumed for example to be 54 kinds of playing cards. In the manufacturing process of the playing card 104, the resonant tags (for example 102a, 102b, and 102c) are printed on the playing card in developed state, which is folded in two to produce a playing card 104 with built-in resonant tags 102a, 102b, and 102c. Incidentally, FIG. 3 shows one face, to be inside face when folded, of the playing card 104 in developed state. The resonant tags 102a, 102b, and 102c are printed on the inside face. On the front faces of the playing cards 104 are respectively printed 54 kinds of card design (not shown); however, the detailed description of which is omitted.

Here, while 54 kinds of resonant tags that oscillate echo waves of mutually different frequencies may be used, it is preferable to recognize the 54 kinds of playing cards 104 with a minimum number of resonant tags so as to prevent incorrect recognition due to echo wave frequencies close to each other and prevent manufacturing cost from increasing. For example, as described in the first embodiment, when eight kinds of resonant tags are used that send echo waves of frequencies different from each other, combinations of three resonant tags (for example 102a, 102b, and 102c) may be printed (₈C₃ = 56). When 11 resonant tags are used, combinations of two resonant tags (for example 102a and 102b) may be printed (₁₁C₂ = 55).

A manufacturing process shown here as an example uses eight resonant tags (only 102a, 102b, and 102c are shown in the drawing), and combinations of three kinds of resonant tags 102a, 102b, and 102c are printed on the 54 playing cards 104, respectively.

The manufacturing process has a printing process (FIG. 3(a)) of printing, three kinds of resonant tags (102a, 102b, and 102c) on the playing cards 104 in developed state and a folding process (FIGs. 3(b) and 3(c)) of folding each playing card 104 printed with the resonant tags 102a, 102b, and 102c in two so that the resonant tags 102a, 102b, and 102c are built inside the playing card 104.

The resonant tags 102a, 102b, and 102c are provided respectively with resonant circuits constituted with coils (inductances) L1, L2, and L3; capacitors (capacitances) C1, C2, and C3; and conductors for interconnecting the coils L1, L2, and L3 and the capacitors C1, C2, and C3. The resonant circuit, when excited with a radio wave of predetermined frequency that equalizes inductive reactance ωL and capacitive reactance 1/ωC, exhibits resonance phenomenon to oscillate an echo wave of the same frequency as that of the radio wave used for the excitation.

In the printing process (FIG. 3(a)), the coils L1, L2, and L3 are printed on one side piece 104a of the playing card 104 in developed state, while the capacitors C1, C2, and C3 are printed on the other side piece 104b of the playing card 104 in developed state. The conductors include one side conductor portions 106a printed on the one side piece 104a to extend from the coils L1, L2, and L3 toward the capacitors C1, C2, and C3, and the other conductor portions 106b printed on the other side piece 104b to extend from the capacitors C1, C2, and C3 toward the coils L1, L2, and L3. Here, the one side conductor portions 106a and the other conductor portions 106b are printed with a sufficient width to secure a press contact area in the folding process (in consideration of mutual printing displacement of the conductor portions 106a and 106b).

In the folding process (FIGs. 3(b) and 3(c)), one side piece 104a and the other side piece 104b of the playing card 104 are cut off to be separated and then one side piece 104a is placed over the other side piece 104b of the playing card 104 so that the one side conductor portions 106a and the other side conductor portions 106b are brought into press contact with each other. In this state, insulation members 108 are printed over the capacitors C1, C2, and C3 of the other side piece 104b of the playing card 104 to isolate coils L1, L2, and L3 from the capacitors C1, C2, and C3.

The above manufacturing method makes it possible to manufacture the playing card 104 integrally with the three kinds of built-in resonant tags 102a, 102b, and 102c at a time, resulting in simplified manufacturing process and reduced manufacturing cost. Moreover, because the resonant tags 102a, 102b, and 102c are built in the playing card 104, the card medium with built-in resonant tags is realized as one excellent in durability with the resonant tags 102a, 102b, and 102c prevented from coming off.

This embodiment also makes it possible to recognize the kinds of all the playing cards 104, even if the number and kinds of the card bodies 104 increase, with a minimum number of resonant tags (for example 102a, 102b, and 102c) by the use of combinations of the plural kinds of resonant tags 102a, 102b, and 102c. In this case, the number of radio wave frequencies used can be minimized, so that the echo wave frequencies of the resonant tags 102a, 102b, and 102c are separated with an ample interval from each other. As a result for example, because frequencies in bands adjacent to each other are not close to each other, it is possible to solve the conventional problem of incorrectly recognizing different objects to be the same ones due to similarity of echo waves in adjacent bands.

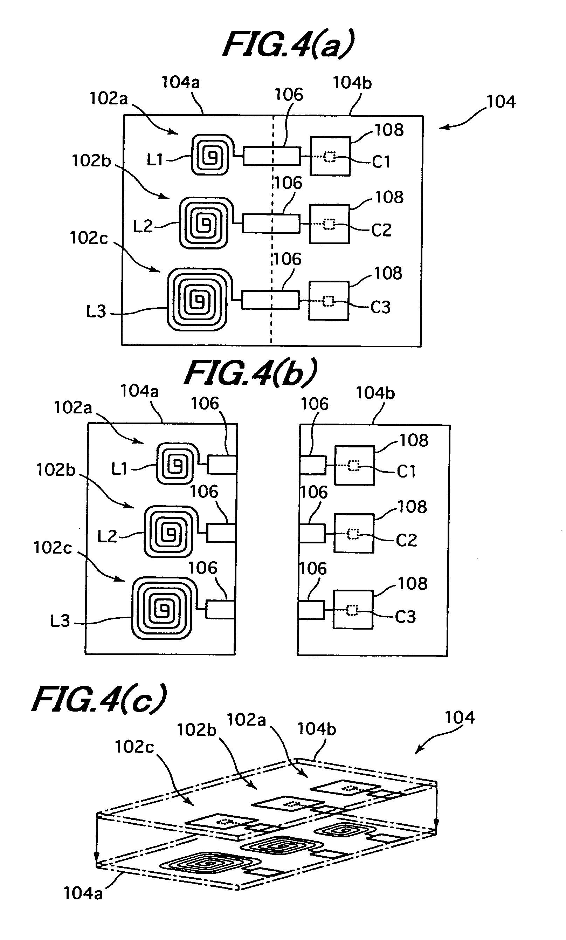

Next, a card medium with built-in resonant tags manufactured according to a manufacturing method as a third embodiment of this invention is described in reference to FIGs. 4(a) to 4(c).

As shown in FIG. 4(a), the conductors 106 of this embodiment are printed so that the coils L1, L2, and L3 of the one side piece 104a of the playing card 104 in developed state are connected to the capacitors C1, C2, and C3 of the other side piece 104b. Here, the conductors 106 are printed with a sufficient width to secure press contact areas during the folding process (in consideration of mutual printing displacement).

In the folding process, one side piece 104a and the other side piece 104b of the playing card 104 are cut off to be separated (FIG. 4(b)) and then the one side piece is placed over the other side piece of the playing card 104 (FIG. 4(c)) so that the conductor 106 of the one side piece 104a and the conductor 106 of the other side piece 104b are tightly mated together.

Otherwise, this embodiment is the same in constitution as the second embodiment. Therefore, the same components as those of the second embodiment (FIG. 3) are provided with the same symbols, and further explanation is omitted.

In this embodiment, because the coils L1, L2, and L3 and the capacitors C1, C2, and C3 are interconnected through the conductors 106 each of which is a single member, the manufacturing process is further simplified to reduce manufacturing cost.

Other effects of this embodiment are the same as those of the second embodiment and therefore their explanations are omitted.

Next with reference to FIGs. 5(a) and 5(b), a card medium with built-in resonant tags manufactured according to a manufacturing method as a fourth embodiment of this invention is described.

As shown in FIG. 5(a), the conductors 106 of this embodiment are printed so that the coils L1, L2, and L3 of the one side piece 104a of the playing card 104 in developed state are connected to the capacitors C1, C2, and C3 of the other side piece 104b. Here, the conductors 106 are printed with a sufficient width to secure a press contact area in the folding process (in consideration of mutual printing displacement).

In the folding process, the one side piece 104a and the other side piece 104b of the card body 104 are mated together by folding it in two (FIG. 5(b)) so that the conductor 106 of the one side piece 104a and the conductor 106 of the other side piece 104b are in press contact with each other.

Because other parts are the same in constitution as that in the second and third embodiments (FIGs. 3 and 4), they are provided with the same symbols and their explanations are omitted.

According to this embodiment, one side piece 104a and the other side piece 104b of the card body 104 are not cut apart and mated face to face with each other by folding the card body in two. Therefore, the manufacturing process is further simplified to reduce manufacturing cost.

In this embodiment, in the state of the one side piece 104a brought into face to face contact with the other side piece 104b of the card body 104 by folding it in two, the folded portion P may exhibit a round shape to bulge out (FIG. 5(c)). To cope with this, if a cut is provided in advance in the folded portion P, it is possible to form the folded portion P with almost flush end surfaces as shown in FIG. 5(d).

Other effects of this embodiment are the same as those of the second and third embodiments and therefore their explanations are omitted.

Next with reference to FIGs: 6(a) to 6(c), a card medium with built-in resonant tags manufactured according to a manufacturing method as a fifth embodiment of this invention is described.

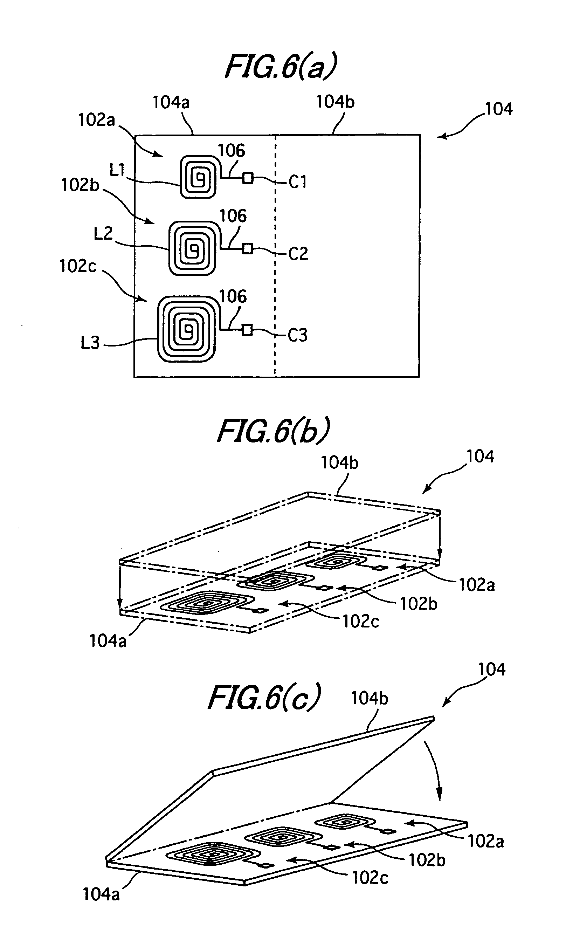

As shown in FIG. 6(a), the resonant tags 102a, 102b, and 102c include the coils L1, L2, and L3; the capacitors C1, C2, and C3; and the conductors 106 for electrically interconnecting the coils and the capacitors. Here, the coils L1, L2, and L3, the capacitors C1, C2, and C3, and the conductors 106 are printed on either of the one side piece 104a or the other side piece 104b of the playing card 104 in developed state. In the folding process, the one side piece 104a and the other side piece 104b of the playing card 104 are mated with each other by folding the card body in two.

Folding method of the folding process may be done for example as shown in FIG. 6(b) in which one side piece 104a and the other side piece 104b of the playing card 104 are cut off and mated with the other, or for example as shown in FIG. 6(c) in which one side piece 104a and the other side piece 104b of the playing card 104 are not cut apart but mated with each other by bending them toward each other.

Otherwise, this embodiment is the same in constitution as the second to fourth embodiments and therefore further explanation is omitted.

According to this embodiment, because the coils L1, L2, and L3, the capacitors C1, C2, and C3, and the conductors 106 are printed on either of the one side piece 104a or the other side piece 104b of the playing card 104, the folding process is simplified. Moreover, because the printing may be done in the state of the coils L1, L2, and L3 separated from the capacitors C1, C2, and C3, the insulation members 108 (FIGs. 3 to 5) are unnecessary. Moreover, because the conductor portions 106 need not be of a wide width, the manufacturing process is further simplified, so that the manufacturing cost is greatly reduced.

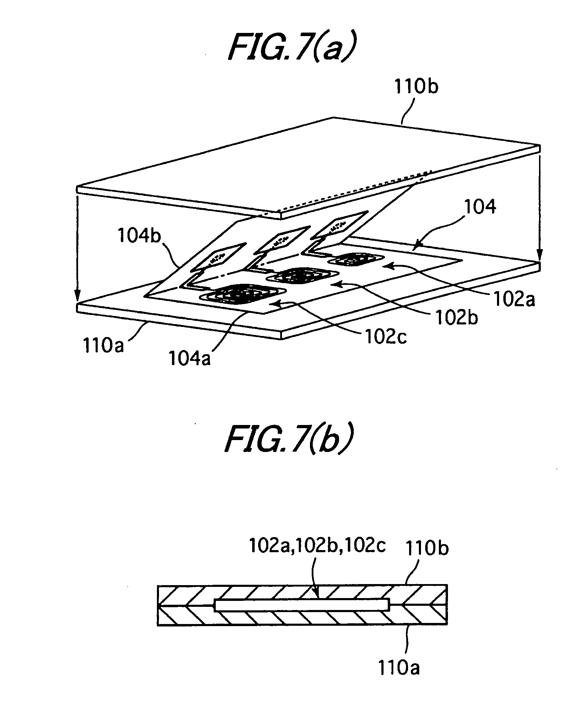

Next with reference to FIGs. 7(a) and 7(b), a card medium with built-in resonant tags manufactured according to a manufacturing method as a sixth embodiment of this invention is described.

As shown in FIGs. 7(a) and 7(b), the manufacturing method of this embodiment for the card medium with built-in resonant tags includes an additional step of disposing outer cover members 110a and 110b to cover the card body 104 with built-in resonant tags 102a, 102b, and 102c manufactured according to the manufacturing method of the second to fifth embodiments (FIGs. 3 to 6) described above.

In this embodiment, a card design is not provided on the surface of the card body 104 but a card design (not shown) is provided on the surface of the outer cover members 110a and 110b. Here, the outer cover members 110a and 110b are disposed to cover the playing card bodies 104 (more specifically, the card bodies 104 are sandwiched with a pair of the outer cover members 110a and 110b) to produce a playing card with built-in resonant tags 102a, 102b, and 102c.

According to this embodiment, because the card body 104 with built-in resonant tags 102a, 102b, and 102c is completely covered with the outer cover members 110a and 110b, it is possible to realize a playing card with its entire appearance made in complete symmetry. Because the card body 104 with built-in resonant tags 102a, 102b, and 102c is made in a very small thickness, the finished playing card does not cause unusual impression.

### INDUSTRIAL APPLICABILITY

The object recognition device according to this invention makes it possible to accurately recognize distributed kinds and positions of objects regardless of their number and kinds.

The manufacturing method according to this invention makes it possible to manufacture a card body with built-in resonant tags integrally and simultaneously in predetermined manufacturing process without limitations to the number and kinds of the card body. The manufacturing method also makes it possible to realize a card medium with built-in resonant tags having good durability with a simple and low-cost manufacturing method.

## Claims

1. A card medium with built-in resonant tag comprising:
a resonant tag for oscillating, when receiving an action of radio wave of predetermined frequency, echo wave of the same frequency as that of the radio wave; and
a card body manufactured integrally and simultaneously with the resonant tag in a predetermined manufacturing process,
wherein the card body with built-in resonant tag is manufactured in the manufacturing process by printing the resonant tag on the card body in developed state, followed by folding the developed state of card body in two.

2. The card medium with built-in resonant tag according to Claim 1, wherein plural kinds of resonant tags for oscillating echo waves of frequencies different from each other are built in the card body.

3. A card medium with built-in resonant tag comprising:
a plurality of resonant tags for oscillating, when receiving an action of radio waves of predetermined frequencies, echo waves of the same frequencies as those of the radio waves;
one side piece forming one face of the card medium with built-in resonant tag; and
the other side piece forming the other face of the card medium with built-in resonant tag, to be placed on the one side piece so as to sandwich the plurality of resonant tags,
wherein the frequencies sent from the plurality of resonant tags are different from each other.

4. A set of card media with built-in resonant tag including a plurality of card media with built-in resonant tag,
each card medium with built-in resonant tag of the plurality of card media with built-in resonant tag comprising:
a plurality of resonant tags for oscillating, when receiving an action of radio waves of predetermined frequencies, echo waves of the same frequencies as those of the radio waves;
one side piece forming one face of the card medium with built-in resonant tag; and
the other side piece forming the other face of the card medium with built-in resonant tag, to be placed on the one side piece so as to sandwich the plurality of resonant tags,
wherein the frequencies sent from the plurality of resonant tags are made different from each other to make it possible to discriminate from each other the plurality of card media with built-in resonant tags according to the combination of the different frequencies.

5. A manufacturing method for a card medium provided with a card body with built-in resonant tag for oscillating, when receiving an action of radio wave of predetermined frequency, echo wave of the same frequency as that of the radio wave, comprising:
a printing step of printing the resonant tag on the card body in developed state; and
a placing step of having the resonant tag built in the card body by placing a portion of the card body on the other portion of the card body, the resonant tag being printed on the card body in the printing step.

6. The manufacturing method for the card medium with built-in resonant tag according to Claim 5, wherein
the resonant tag is provided with a coil, a capacitor, and a conductor for electrically interconnecting the coil and the capacitor;
the coil is printed on one side piece of the card body in developed state;
the capacitor is printed on the other side piece of the card body in developed state;
the conductor is provided with one side conductor portion printed on the one side piece extending from the coil toward the capacitor, and the other side conductor portion printed on the other side piece extending from the capacitor toward the coil; and
in the placing step, the one side piece and the other side piece of the card body are cut apart and then the one side piece of the card body is placed on the other side piece so that the one side conductor portion and the other side conductor portion are brought into press contact with each other.

7. The manufacturing method for the card medium with built-in resonant tag according to Claim 6, wherein the one side conductor portion and the other side conductor portion are printed in a wide width to secure press contact area in the folding process.

8. The manufacturing method for the card medium with built-in resonant tag according to Claim 5, wherein
the resonant tag is provided with a coil, a capacitor, and a conductor for electrically interconnecting the coil and the capacitor;
the coil is printed on one side piece of the card body in developed state;
the capacitor is printed on the other side piece of the card body in developed state;
the conductor is printed to interconnect the coil on the one side piece and the capacitor on the other side piece; and
in the placing step, the one side piece and the other side piece of the card body are cut apart and then the one side piece of the card body is placed on the other side piece so that the conductor on the one side piece and the conductor on the other side piece are brought into press contact with each other.

9. The manufacturing method for the card medium with built-in resonant tag according to Claim 5, wherein
the resonant tags are provided with a coil, a capacitor, and a conductor for electrically interconnecting the coil and the capacitor;
the coil is printed on one side piece of the card body in developed state;
the capacitor is printed on the other side piece of the card body in developed state;
the conductor is printed to interconnect the coil on the one side piece and the capacitor on the other side piece; and
in the placing step, the one side piece and the other side piece of the card body are folded in each other by bending the card body in two so that the conductor on the one side piece and the conductor on the other side piece are brought into press contact with each other.

10. The manufacturing method for the card medium with built-in resonant tag according to Claim 8 or 9, wherein the conductor is printed in a wide width to secure press contact area in the placing step.

11. The manufacturing method for the card medium with built-in resonant tag according to Claim 5, wherein
the resonant tag is provided with a coil, a capacitor, and a conductor electrically interconnecting the coil and the capacitor;
the coil, the capacitor, and the conductor are all printed on either one of the one side piece or the other side piece of the card body in developed state; and
in the placing step, the one side piece and the other side piece of the card body are folded in each other by bonding the card body in two.

12. A manufacturing method for a card medium provided with a card body with built-in resonant tag for oscillating, when receiving an action of radio wave of predetermined frequency, echo wave of the same frequency as that of the radio wave, comprising:
a printing step of printing the resonant tag on the card body in developed state;
a placing step of having the resonant tag built in the card body by placing a portion of the card body on the other portion of the card body, the resonant tag is printed on the card body in the printing step; and
a disposing step of disposing outer covers to enclose the card body with built-in resonant tag.

13. The manufacturing method for the card medium with built-in resonant tag according to any one of Claims 5 to 12, wherein a plural kinds of resonant tags for oscillating echo waves of frequencies different from each other are built in the card body.

14. An object recognition device capable of recognizing distributed kinds and distributed positions of objects, comprising:
a plurality of resonant tags for sending echo waves of different frequencies from each other;
an object holding section for holding a plurality of objects each provided with the plurality of resonant tags;
a detection system for transmitting predetermined frequencies of radio waves to the respective objects distributed from the object holding section to predetermined distribution areas, and for detecting echo waves sent from the plurality of resonant tags when the radio waves are transmitted; and
a recognition system for recognizing distributed kinds and distributed positions of the objects based on the echo waves detected with the detection system.

15. The object recognition device according to Claim 14, wherein the detection system is provided with:
a transmission circuit for transmitting radio waves, for causing the plurality of resonant tags to send echo waves, to the plurality of objects;
a frequency registration section for setting and registering the frequencies of the radio waves;
a transmission circuit control section for causing the transmission circuit to transmit radio waves corresponding to respective frequencies registered in the frequency registration section;
an object-corresponding frequency registration section for combining and choosing two or more frequencies out of the frequencies registered in the frequency registration section and registering the two or more chosen frequencies as respectively related to the plurality of objects;
a reception circuit for receiving the echo waves sent from the plurality of resonant tags when the radio waves are transmitted from the transmission circuit;
an analysis-check section for analyzing the frequencies of the echo waves received with the reception circuit based on the frequencies registered in the frequency registration section and checking the analyzed frequencies with the plurality of objects registered in the object-corresponding frequency registration section; and
a level detection circuit for detecting the voltage value levels of the echo waves analyzed with the analysis-check section.

16. The object recognition device according to Claim 14, wherein the recognition system is provided with:
a kind recognition circuit for recognizing the distributed kinds of the objects based on the checked results made with the analysis-check section; and
a position recognition circuit for recognizing the distributed positions of the objects based on voltage levels of the echo waves detected with the level detection circuit.

17. The object recognition device according to Claim 16, wherein the distribution areas are predetermined on an object placing area constituted by arranging a plurality of detection systems, the kind recognition circuit recognizes the distributed kinds of the objects based on the checked results made with the analysis-check section of the detection system while the objects are distributed from the object holding section to the distribution areas, and the position recognition circuit recognizes the distributed positions of the objects on the distribution areas based on the voltage value levels of the echo waves detected with the level detection circuit of the detection system. -

18. The object recognition device according to Claim 15, wherein the radio waves corresponding to respective frequencies registered in the frequency registration section are transmitted from the transmission circuit of the detection system at predetermined time intervals in succession.

19. A card medium recognition device capable of recognizing distributed kinds and distributed positions of card media, comprising:
a plurality of card media each with built-in resonant tags for sending echo waves of different frequencies from each other;
a card medium holding section for holding the plurality of card media;
a detection system for transmitting predetermined frequencies of radio waves to the respective card media distributed in predetermined distribution areas from the card medium holding section and for detecting echo waves sent from the plural kinds of resonant tags when the radio waves are transmitted; and
a recognition system for recognizing distributed kinds and distributed positions of the card media based on the echo waves detected with the detection system.

20. An object recognition device capable of recognizing distributed kinds and distributed positions of a plurality of objects,
wherein the plurality of objects are card media with built-in resonant tag, each provided with a resonant tag for oscillating echo wave of the same frequency as a frequency of a radio wave when receiving an action of the radio waves of predetermined frequencies, and a card body manufactured integrally and simultaneously with the resonant tag during a predetermined manufacturing process, the card body with built-in resonant tag is manufactured by printing the resonant tag on the card body in developed state and then placing a portion of the card body on the other portion of the card body in the developed state, and the respective resonant tag of the objects sends an echo wave of a different frequency from each other,
the object recognition device comprising:
an object holding section for holding the plurality of objects each provided with the resonant tag;
a detection system for transmitting predetermined frequencies of radio waves to the respective objects distributed in predetermined distribution areas from the object holding section, and for detecting the respective echo waves sent from the resonant tags when the radio waves are transmitted; and
a recognition system for recognizing distributed kinds and distributed positions of the objects based on the echo waves detected with the detection system.
